# EUROPÄISCHE PATENTANMELDUNG

(11) **EP 1 172 591 A2**
(43) Veröffentlichungstag der Anmeldung: **16.01.2002**
(21) Anmeldenummer: 01115996.9
(22) Anmeldetag: 30.06.2001
(51) Int. Cl.: F16K 31/04

(54) **Schutzeinrichtung**

(30) Priorität: 15.07.2000 DE 10034482
(71) Anmelder: KSB Aktiengesellschaft, 67227 Frankenthal (DE)
(72) Erfinder: Lienert, Franz, 90596 Schwanstetten (DE); Mehrfar, Hamid, 91077 Dormitz (DE)

(57) **Zusammenfassung**

Schutzeinrichtung, insbesondere für mit Stellantrieben angetriebene Armaturen, wobei eine Rotationsbewegung des Stellantriebes auf eine Armaturenspindel und/oder eine Spindelmutter (3) einer Armatur (6) einwirkt und Drehmoment-Endlagenschalter einen Motor des Stellantriebes bei Erreichen von vorgewählten Endlagen abschalten. An der Armatur ist zwischen Stellantrieb und Armatur oder im Antrieb eine Überlastsicherung (4) angeordnet. Die Überlastsicherung besteht aus einem beim Stellvorgang axial verschieblich und rotierend ausgebildeten Sicherungsteil (7) und Anschläge (14) bremsen das Sicherungsteil in seiner Bewegungsrichtung ab.

## Beschreibung

Die Erfindung betrifft eine Schutzeinrichtung, insbesondere für mit Stellantrieben angetriebene Armaturen, wobei eine Rotationsbewegung des Stellantriebes auf eine Armaturenspindel und/oder eine Spindelmutter einer Armatur einwirkt und Drehmoment-Endlagenschalter einen Motor des Stellantriebes bei Erreichen von vorgewählten Endlagen abschalten.

Das Öffnen und Schließen von in Anlagen eingebauten Armaturen erfolgt in einer Vielzahl von Fällen mit Hilfe eines Stellantriebes. Solche Stellantriebe, die elektrisch angetrieben werden, haben Endlagenschalter, mit deren Hilfe beim Erreichen einer vorgewählten Position, gewöhnlich eine Schließ- oder Öffnungsstellung, der Motor des Stellantriebes abgeschaltet wird. Solche Endlagenschalter sind als Drehmomentendschalter oder Wegeendschalter ausgebildet.

Die Drehmomentendschalter sind in Abhängigkeit von der zu betätigenden Armatur auf ein bestimmtes Drehmoment eingestellt, welches zum einen die Funktion der Armatur gewährleistet und zum anderen die im Kraftfluß liegenden Armaturenbauteile vor einer Überlastung schützt. Solche Endlagenschalter können auch ausfallen, wodurch der Nachteil entsteht, daß infolge der weiterhin wirkenden Antriebskraft des Stellantriebes eine Überlastung der Armaturenbauteile möglich ist.

Ein Elektromotor durchläuft beim Ausfall des Drehmoment-Endlagenschalters und beim Erreichen einer Armaturenendlage, welche den Elektromotor abbremst, auf seiner Kennlinie vom Betriebspunkt bis zum Stillstand auch den Punkt seines Kippmomentes. Ein solches Kippmoment beträgt ein Vielfaches des für den Betrieb eingestellten notwendigen Drehmomentes. Infolgedessen kann es durch eine solche Überlastung zu Verformungen oder sogar zu Zerstörungen von funktionswichtigen Teilen führen. Im Extremfall kann sogar die Druckhülle einer Armatur Schaden nehmen, was insbesondere beim Regeln von gefährlichen Fluiden nicht zu verantworten ist.

Der Erfindung liegt daher die Aufgabe zugrunde, eine Sicherungseinrichtung zu entwickeln, mit deren Hilfe beim Ausfall von Drehmoment-Endlagenschaltern ein Stellantrieb keine unzulässig hohen Kräfte erzeugt und Beschädigungen an davon betroffenen Bauteilen vermieden werden.

Die Lösung dieses Problems sieht vor, daß an der Armatur, zwischen Stellantrieb und Armatur oder im Antrieb eine Überlastsicherung angeordnet ist, daß die Überlastsicherung aus einem beim Stellvorgang axial verschieblich und rotierend ausgebildeten Sicherungsteil besteht und daß ortsfeste Anschläge das Sicherungsteil in seiner Bewegungsrichtung abbremsen.

Mit Hilfe eines oder mehrerer solcher Sicherungsteile wird ein Bremsmechanismus vorgesehen, mit dessen Hilfe eine überschüssige und die im Kraftfluß liegenden Bauteile gefährdende Energie vom Stellantrieb durch Reibung vernichtet wird. Das Sicherungsteil, welches direkt in eine Armatur, in deren Aufbauten oder für Nachrüstzwecke zwischen Stellantrieb und Armatur oder in den Stellantrieb integriert werden kann, baut durch Reibung in einfachster Weise eine beim Ausfall des Drehmoment-Endlagenschalters auftretende überschüssige Energie des Antriebsmotors zuverlässig ab.

Gemäß einer Ausgestaltung der Erfindung ist das Sicherungsteil in einer Achsrichtung oder in zwei einander entgegengesetzten Achsrichtungen durch federnde Elemente abgestützt. Im normalen Betrieb, also bei funktionierendem Drehmoment-Endlagenschalter, werden die Federelemente entgegengesetzt der Verschieberichtung etwas zusammengedrückt, bis sie einer aus dem Drehmoment resultierenden Spindelkraft das Gleichgewicht halten. Bei einer solchen Betriebsweise, bei der die schützenden Drehmoment-Endlagenschalter funktionieren und ansprechen, tritt die Überlastsicherung nicht in Funktion. Jedoch beim Versagen der Drehmoment-Endlagenschalter arbeitet die Überlastsicherung gegen die Federkraft an, bis sie an Anschlägen anliegt. Die drehende und axial verschiebliche Überlastsicherung wird somit infolge Reibung abgebremst und vernichtet hierbei einen großen Teil des aus dem Kippmoment resultierenden sehr hohen Antriebsdrehmoment.

Dazu sehen weitere Ausgestaltungen der Erfindung vor, daß das Sicherungsteil scheibenförmig ausgebildet ist, in ein während der Stellbewegung rotierendes und axial verschiebliches Bauteil integriert ist, über ein oder mehrere radial vorstehende Vorsprünge verfügt, scheibenförmig und von seiner Rotationsachse axial abstehend gestaltet ist und auf das Sicherungsteil einwirkende ortsfeste Anschläge eine zwischen diesen Teilen eine Reibungskräfte erzeugende Bremsfläche ausgebildet ist. Mit der Geometrie des Sicherungsteiles und der Größe der Anschläge bzw. der Bremsfläche von Sicherungsteil und Anschlägen kann bestimmt werden, daß keine Überlastung der im Kraftfluß liegenden Bauteile auftritt und damit die Bauteile nicht über ihre zulässigen Werkstoff-Spannungswerte belastet werden. Mit Hilfe einer solchen Überlastsicherung wird in zuverlässiger Weise eine Beschädigung von Armaturenbauteilen verhindert, wenn ein Drehmoment-Endlagenschalter ausfallen sollte.

Ausführungsbeispiele der Erfindung sind in den Zeichnungen dargestellt und werden im folgenden näher beschrieben. Es zeigen die
- Fig. 1: ein Hubventil mit integrierter Überlastsicherung, die
- Fig. 2: eine als selbsttätige Baueinheit ausgebildete Überlastsicherung, die
- Fig. 3: eine in einen Stellantrieb integrierte Sicherungseinrichtung und die
- Fig. 4 bis 6: verschiedene Bauformen einen Sicherungsteiles.

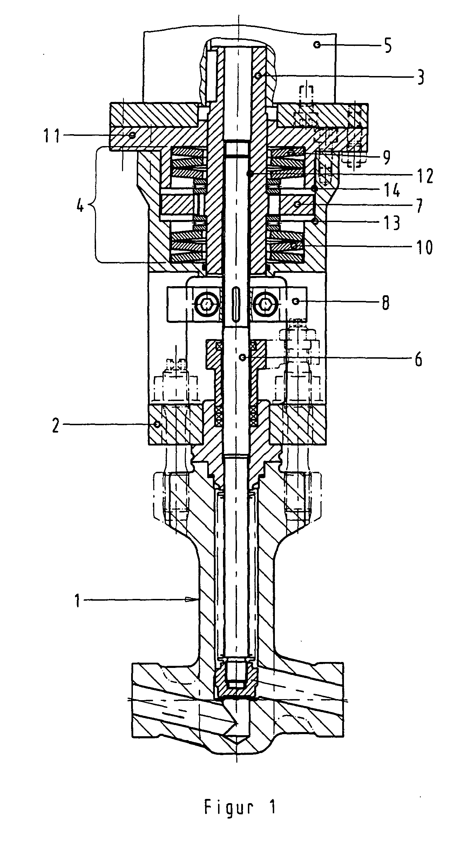

In der Fig. 1 ist eine Armatur 1 in Form eines Hubventils dargestellt. In das Ventiloberteil 2, in dem eine Spindelmutter 3 gelagert ist, sind die Bauteile der Überlastsicherung 4 integriert. Die Spindelmutter 3 wird durch einen Stellantrieb 5 in Rotation versetzt, wodurch eine darin in einem Gewinde geführte Ventilspindel 6 in axialer Richtung verschoben wird. Hier nicht dargestellte Drehmoment-Endlagenschalter, die gewöhnlich Bestandteil des Stellantriebes 5 sind, bewirken ein Abschalten des Stellantriebes. Zum Schutz der Armaturenbauteile bei einer zu großen Krafteinleitung durch den Stellantrieb 5, welche bedingt ist durch das Versagen der Drehmoment-Endlagenschalter, greift die Überlastsicherung ein.

Ein Sicherungsteil 7 ist kräfteübertragend mit der Spindelmutter 3 verbunden und verschiebt sich mit dieser bei einer Drehbewegung, wenn die Armaturenspindel gegen Endanschläge fährt.

Die Armaturenspindel ist durch eine Einrichtung 8 gegen Verdrehung gesichert, aber gegenüber der Spindelmutter 3 in axialer Richtung verschieblich. Die Spindelmutter 3 ist aufgrund des in radialer Richtung vorstehenden Sicherungsteils und daran auf beiden Achsrichtungen anliegenden Federelementen 9 in axialer Richtung festgelegt. Die Federelemente 9, 10 stützen sich im Gehäuseoberteil ab. Ein das Gehäuseoberteil 2 verschießender Deckel 11 wird hierbei als Bestandteil des Gehäuseoberteiles angesehen, da er kräfteübertragend mit diesem verbunden ist. Die auf kleinem Durchmesser des Sicherungsteiles 7 befindlichen Anlagenflächen zwischen diesem und den Federelementen sind so bemessen oder gestaltet, daß die dort aufgrund der Federkräfte wirkenden Reibungskräfte eine Verstellbewegung der Armaturenspindel nicht behindern.

Im Schadensfall, beim Versagen von den Drehmoment-Endlagenschaltern des elektrischen Stellantriebes 5 ergibt sich in einer Endlage der Armatur 1, hier der gezeigten Schließstellung, folgende Situation:

Da das zu verstellende Bauteil, hier die Armaturenspindel 6, bereits ihre Endlage erreicht hat und damit die Drehbewegung des Motors abgebremst wurde, erzeugt dieser aufgrund seiner Kennlinie ein Drehmoment, welches ein Vielfaches des für den Betrieb einstellten Drehmomentes beträgt. Dieses Drehmoment, auch als Kippmoment eines Elektromotors bezeichnet, kann das Fünffache eines normalen Drehmomentes erreichen. Im Normalfall würde die dadurch erzeugte Kraft funktionswesentliche Armaturenbauteile zerstören. Aufgrund der vorhandenen Überlastsicherung 4 wird dies verhindert. Das vom Stellantrieb ausgeübte Drehmoment wirkt unmittelbar auf die Stellmutter 3 ein, welche sich aufgrund des Sicherungsteiles 7 und der daran anliegenden Federelemente 9 nunmehr gegenüber der bereits stillstehenden Armaturenspindel 6 verdrehen kann und auf dem Gewinde 12 und gegen die Kraft der Federelemente 10 um die Armaturenspindel herum nach oben gedreht wird, bis das Sicherungsteil 11 mit seinem großen Durchmesser gegen ortsfeste Anschläge 14 anläuft. Die Berührungsfläche zwischen den Anschlägen 14 und dem Sicherungsteil 7, die beim Anlaufen als Bremsfläche wirkt, ist so groß bemessen, daß die dabei entstehende Reibung das Drehmoment der Antriebe vermindert. Somit werden die zu hohen Kräfte vom Stellantrieb durch Reibung verkleinert. Die für die Funktion einer Armatur wesentlichen Teile werden dadurch nicht beschädigt.

Tritt ein Ausfall eines Drehmoment-Endlagenschalters bei der Öffnungsbewegung auf, so läuft das Sicherungsteil 7 an den entsprechenden ortsfesten Anschlägen 13 des Gehäuses an. Dabei wirken dann die Kräfte der Federelemente 10. Die Spindelmutter 3 wird in diesem Fall aus ihrer normalen zentrischen Ruhelage durch Drehung um das Gewinde 12 der Armaturenspindel 6 nach unten verschoben und an den unteren Anschlägen 13 abgebremst.

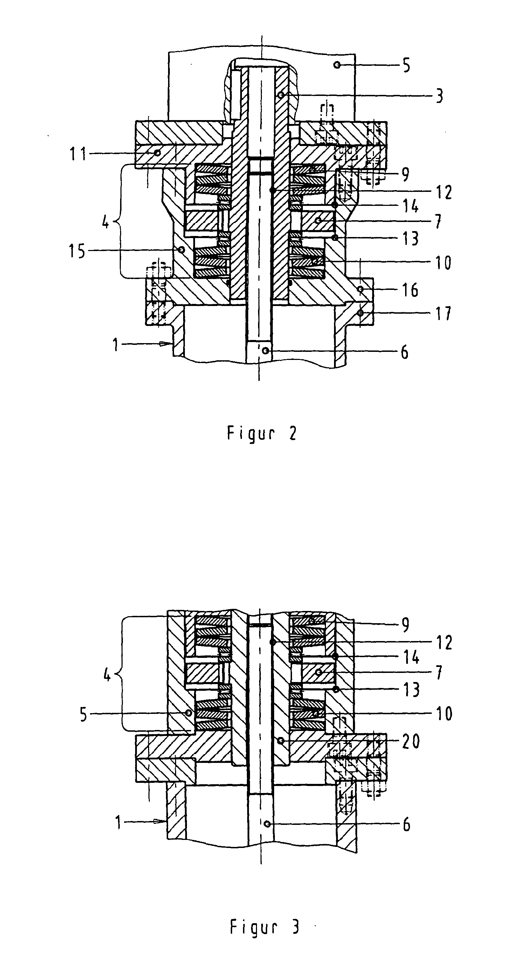

Die Fig. 2 zeigt eine Ausführungsform, bei der die Überlastsicherung 4 Bestandteil eines separaten Gehäuses 15 ist. Mit Hilfe einer Flanschverbindung 16 kann es auch nachträglich an eine bereits in eine Anlage eingebaute Armatur 1 an deren Deckelflansch 17 angebaut werden. Die Wirkungsweise der als selbständige Baueinheit ausgebildeten Überlastsicherung ist analog der Beschreibung von Fig. 1.

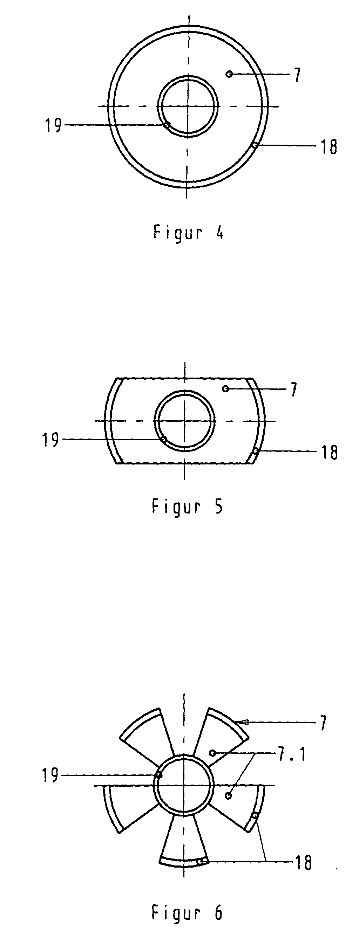

In der Fig. 3 ist eine Variante gezeigt, bei der die Überlastsicherung 4 direkt in einen Stellantrieb 5 integriert ist. Ein Kupplungselement 20, welches mit dem Gewinde 12 einer Armaturenspindel direkt zusammenwirkt, verfügt in diesem Fall über das Sicherungsteil 7. Die ortsfesten Anschläge 13, 14 sind hierbei in das Gehäuse des Stellantriebes 5 integriert.

Die Fig. 4 bis 6 zeigen in Achsrichtung Draufsichten auf verschiedene mögliche Ausführungsformen des Sicherungsteiles 7. Das Sicherungsteil 7 ist hierbei schematisch dargestellt und kann mit Hilfe der bekannten maschinenbaulichen Fügetechniken an funktionswesentlichen Bauteilen befestigt werden.

In Fig. 4 ist ein scheibenförmiges Sicherungsteil 7 gezeigt. Hierbei wirkt in Abhängigkeit von der Verwendung findenden, die Axialverschiebung gewährleistenden Gewindesteigung eines Bauteiles, an dem das Sicherungsteil 7 befestigt ist, eine optimale Größe der Bremsfläche 18. Die Größe dieser Bremsfläche 18 stimmt mit den Abmessungen der Anschläge 13, 14 überein. Eine Nabe 19 dient zur Kräfteübertragung zwischen dem Sicherungsteil 7 und einem damit verbundenen Bauteil.

In Fig. 5 ist ein Sicherungsteil 7 gezeigt, welches von der Funktion her wie ein Querbolzen gestaltet ist. Durch entsprechend dimensionierte Flächen der Anschläge 13, 14, welche abhängig vom Bauteil sind, an dem die Überlastsicherung 4 Verwendung findet, können die notwendigen Reibkräfte erzeugt werden.

Die Fig. 6 zeigt eine Ausführungsform, bei der das Sicherungsteil 7 über mehrere in radialer Richtung abstehende Segmente 7.1 verfügt.

## Patentansprüche

1. Schutzeinrichtung, insbesondere für mit Stellantrieben angetriebene Armaturen, wobei eine Rotationsbewegung des Stellantriebes (5) auf eine Armaturenspindel (6) und/oder eine Spindelmutter (3) einer Armatur (1) einwirkt und Drehmoment-Endlagenschalter einen Motor des Stellantriebes (5) bei Erreichen von vorgewählten Endlagen abschalten, **dadurch gekennzeichnet, daß** an der Armatur (1), zwischen Stellantrieb (5) und Armatur (1) oder im Antrieb (5) eine Überlastsicherung (4) angeordnet ist, daß die Überlastsicherung (4) aus einem beim Stellvorgang axial verschieblich und rotierend ausgebildeten Sicherungsteil (7) besteht und daß Anschläge (13, 14) das Sicherungsteil (7) in seiner Bewegungsrichtung abbremsen.

2. Schutzeinrichtung nach Anspruch 1, **dadurch gekennzeichnet, daß** das Sicherungsteil (7) in die Armatur (1) oder in den Stellantrieb (5) integriert ist.

3. Schutzeinrichtung nach Anspruch 1, **dadurch gekennzeichnet, daß** das Sicherungsteil (7) und ortsfeste Anschläge (13, 14) in einem separaten Sicherungsgehäuse (15) angeordnet sind.

4. Schutzeinrichtung nach Anspruch 1, 2 oder 3, **dadurch gekennzeichnet, daß** das Sicherungsteil (7) in einer Achsrichtung oder in zwei einander entgegengesetzten Achsrichtungen durch federnde Elemente (9, 10) abgestützt ist.

5. Schutzeinrichtung nach einem der Ansprüche 1 bis 4, **dadurch gekennzeichnet, daß** das Sicherungsteil (7) scheibenförmig ausgebildet ist.

6. Schutzeinrichtung nach einem der Ansprüche 1 bis 4, **dadurch gekennzeichnet, daß** das Sicherungsteil (7) in ein während der Stellbewegung rotierendes und axial verschiebliches Bauteil integriert ist.

7. Schutzeinrichtung nach Anspruch 5, **dadurch gekennzeichnet, daß** das Sicherungsteil (7) mit ein oder mehreren radial abstehenden Vorsprüngen (7.1) versehen ist.

8. Schutzeinrichtung nach Anspruch 5, **dadurch gekennzeichnet, daß** das Sicherungsteil (7) scheibenförmig und von seiner Rotationsachse radial abstehend gestaltet ist.

9. Schutzeinrichtung nach einem oder mehreren der Ansprüche 1 bis 8, **dadurch gekennzeichnet, daß** zwischen dem Sicherungsteil (7) und den ortsfesten Anschlägen (13, 14) eine Reibungskräfte erzeugende Bremsfläche (18) ausgebildet ist.
